# EUROPEAN PATENT APPLICATION

(11) **EP 2 934 043 A1**
(43) Date of publication of application: **21.10.2015**
(21) Application number: 13865184.9
(22) Date of filing: 15.02.2013
(51) Int. Cl.: H04W 36/08, H04W 48/08

(54) **SYSTEM AND METHOD FOR IDENTIFYING TARGET DENB CELL**

(30) Priority: 17.12.2012 KR 20120147570; 14.02.2013 KR 20130016041
(71) Applicant: Ericsson-LG Co., Ltd., Seoul 135-985 (KR)
(72) Inventor: KIM, Sang Ha, Seoul 138-908 (KR)
(74) Representative: Katérle, Axel
(86) International application number: PCT/KR2013/001182
(87) International publication number: WO 2014/098313

(57) **Abstract**

Disclosed are a system and a method for identifying a target DeNB cell for handing over to the target DeNB cell during an inband operation of 3GPP(3^{rd} Generation Partnership Project) REL-12 mobile relay node. A donor DeNB combines two basic downlink backhaul subframe patterns on the basis of the basic downlink backhaul subframe patterns to configure a downlink backhaul subframe pattern corresponding to a backhaul link operated at the same frequency as that of an access link, and identifies the target donor DeNB cell for handing over on the basis of the downlink backhaul subframe.

## Description

### TECHNICAL FIELD

The present disclosure relates to a mobile communication system, and more particularly, to a system and a method for identifying a target base station cell for handover to a target base station cell (target DeNB cell) during an inband operation of a 3^{rd} generation partnership project (3GPP) REL-12 mobile relay node.

The present disclosure is derived from research conducted as part of a next generation communication network technology originally development under the Korea Communications Commission (KCA-2012-10911-04002).

### BACKGROUND

3GPP REL-10 completed standards for inband fixed relay node. Meanwhile, 3GPP REL-11 started research into mobile relays, and REL-12 is expected to complete standards for mobile relay nodes (M-RNs).

Deployment of M-RNs assumed in 3GPP is based on the assumption of operation in high-speed trains, such as TGV or Shinkansen bullet trains, which move at a speed equal to or higher than 300 Km on predetermined tracks, and in particular, a scheme of providing mobility between a plurality of DeNB cells that are already installed in railroad tracks during an inband operation of M-RNs has been researched.

### SUMMARY

The present disclosure provides some embodiments of a system and a method for identifying a target base station cell, which identifies a new DeNB cell in a backhaul link with the least influence on an access link operated at the same frequency for handover to a new DeNB cell on a backhaul link upon movement of mobile relay node (M-RN) when a 3GPP REL-12 M-RN operates in an inband manner.

According to an embodiment of the present disclosure, there is provided a system for identifying a target base station cell, the system including: a plurality of donor base stations positioned on a predetermined track in which a moving object moves, and configured to set a downlink backhaul subframe corresponding to a backhaul link operated at the same frequency as that of an access link by combining two basic downlink backhaul subframe patterns on the basis of a plurality of basic downlink backhaul subframe patterns; a relay node operation and management server configured to transmit cell list information corresponding to the plurality of donor base stations; and a mobile relay node managed in an inband manner, and configured to perform cell camping to a cell of a first donor base station based on the cell list information, and to identify a cell of a second donor base station to perform handover from the cell of the first donor base station based on the downlink backhaul subframe.

According to another embodiment of the present disclosure, there is provided a method for identifying a target base station cell, the method including: a) performing cell camping to a cell of a fist donor base station based on cell list information of a plurality of donor base stations positioned on predetermined tracks in which a moving object moves; and b) identifying a cell of a second donor base station to perform handover from the cell of the first donor base station based on a down link backhaul subframe, which is configured by combing two basic downlink backhaul subframe patterns on the basis of a plurality of basic downlink backhaul subframe patterns and corresponds to a backhaul link operated at the same frequency as that of an access link.

According to the present disclosure, it is possible to identify a new target base station cell in a backhaul link with minimal influence on an access link operated at the same frequency during an inband operation of a 3GPP REL-12 mobile relay node.

### BRIEF DESCRIPTION OF THE DRAWINGS

**FIG. 1** is a view illustrating a downlink backhaul subframe pattern for an inband operation.
**FIG. 2** is a view illustrating mobility support for a mobile relay node.
**FIG. 3** is a view illustrating a downlink backhaul subframe pattern according to an embodiment of the present disclosure.
**FIG. 4** is a view illustrating an example of identifying a new target DeNB cell using an uplink backhaul subframe according to an embodiment of the present disclosure.

### DETAILED DESCRIPTION

Embodiments of the present disclosure will now be described in detail with reference to the accompanying drawings. In the following description, however, if a detailed description of related known functions or components is considered to unnecessarily divert from the gist of the present disclosure, such a description will be omitted.

A 3^{rd} generation partnership project (3GPP) REL-10 standard has completed standardization of an inband fixed relay node. In order to operate a relay node (RN) as inband, it is required to avoid self-interference (SI) in an RN by time division multiplexing (TDM) in which subframes that may be used for transmission and reception are divided between a Un interface and a Uu interface. Herein, the Un interface is an interface between a donor evolved NodeB (DeNB) and an RN in a backhaul link, the Uu interface is an interface between the RN and a user equipment (UE) under an RN cell in an access link, the backhaul link is a wireless link between the DeNB and the RN, and the access link is a wireless link between the RN and the UE under the RN cell.

In order to avoid the SI, the RN, when turned on, receives a cell list of the DeNB from an RN operation and management server in a UE mode and is camped on a DeNB cell in an RRC_IDLE mode. Herein, cell camping refers to performing a cell selection procedure or a cell reselection procedure and selecting a cell. At this time, after time synchronization for the DeNB cell is obtained through a primary synchronization signal (PSS), a secondary synchronization signal (SSS), and a master information block (MIB) of the DeNB cell, an RRC connection is established, and a downlink backhaul subframe (DL BHSF) pattern to be used in a backhaul link for TDM is received from the DeNB.

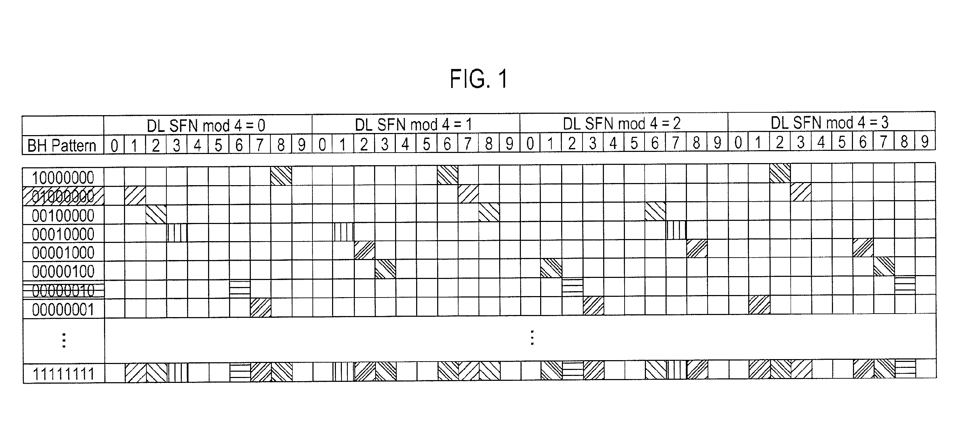

As illustrated in **FIG. 1****,** the DL BHSF transmitted by 8 bits based on 8 ms downlink Un hybrid automatic repeat request round trip time (DL Un HARQ RTT) from the DeNB is transmitted by a 8-bit pattern by the DeNB semi-statistically depending on the number of RNs under a corresponding DeNB and the number of active UEs under each RN among 2⁸ number of patterns having a 40 ms period. Meanwhile, an uplink backhaul subframe (UL BHSF) pattern is implicitly set between two nodes by a corresponding DL BHSF+4 without explicit signaling. The DL BHSF so determined is transmitted to an RN through an RRC RNReconfiguration message. At this time, the corresponding DL BHSF is set to a multicast broadcast single frequency network (MBSFN) in an access link. Thus, using a data portion of the MBSFN subframe where a CRS does not exist, UEs under an RN cell do not perform any reception in the corresponding portion, preventing a measurement error for the corresponding cell, whereby a problem may be prevented when wireless quality evaluation regarding a serving cell is performed and at the same time an RN may receive downlink backhaul data from the DeNB without SI during a corresponding time.

Since the inband fixed RN is a fixed RN, mobility in an RRC_Connected state like a general UE is not necessary, but (re)selection for the DeNB cell in an RRC_IDLE state is required if there is a problem in a backhaul link when the inband fixed RN is initially camped on the DeNB cell or while it is being operated. In the event of (re)selection for the DeNB cell, a service for UEs under the corresponding fixed RN cell is stopped, and the service is resumed by an "RN reconfiguration" message for DL BHSF setting after a success in (re)selection in the backhaul link.

A channel quality indicator (CQI), a session relay server (SRS), and the like for the backhaul link use an aperiodic reporting mode in REL-10 standard due to the discontinuous UL BHSF, and a hybrid automatic repeat request (HARQ) feedback for downlink backhaul data reception is transmitted through a fixed physical uplink control channel (PUCCH) resource transmitted by the DeNB due to an R-PDCCH signaling scheme excluding a control channel element (CCE) concept.

Research into a mobile relay in 3GPP REL-11 standard has recently started. Also, it is expected to complete standardization of a mobile relay node (M-RN) in 3GPP REL-12 standard, and in order to provide effective mobility for the M-RN, the use of different operator frequencies between the backhaul link and an access link or an operation of the mobile relay by supporting multi-ratio access technology (RAT) or operation thereof as an inband or outband operation are defined as a "requirement". In particular, the inband operation has been determined as a "study item". Deployment of M-RNs assumed in 3GPP is based on the assumption of operation in high-speed trains, such as TGV and the Shinkansen bullet trains, which move at a speed equal to or higher than 300 Km in predetermined tracks. That is, mobility support is required between a plurality of DeNB cells that are already installed in railroad tracks for M-RNs.

In case of the general UE, a hard handover based on the best cell concept is performed in order to minimize interference in a cell change of an intra FA in an RRC-connected mode. A UE performs intra/inter FA measurement when reference symbol received power (RSRP) of a serving cell is lower than "s-measure" as a measurement start threshold value for a new cell and there is no data reception from the serving cell, thus attempting identification of the new cell.

During a new cell detecting process, first, a slot timing is detected and a physical cell ID is recognized through a primary synchronization signal (PSS) of a new target cell, and a wireless frame timing detection, a cell ID, a downlink cyclic prefix length, and a dual mode are recognized through a secondary synchronization signal (SSS), and thereafter, measurement results of reference symbol received power (RSRP)/reference signal received quality (RSRQ) for a common reference signal (CRS) of a corresponding new target cell are reported to the serving cell, thereby performing a handover preparation to a new target cell.

However, in case of an inband M-RN, as illustrated in **FIG. 1****,** due to a restriction that subframes sf#0 and sf#5 used for allocating the PSS and SSS cannot be set as DL BHSFs, it is not easy to support mobility in the RRC-connected mode. Thus, a scheme of providing mobility in an inband operation of the REL-12 mobile relay in 3GPP has been recently researched.

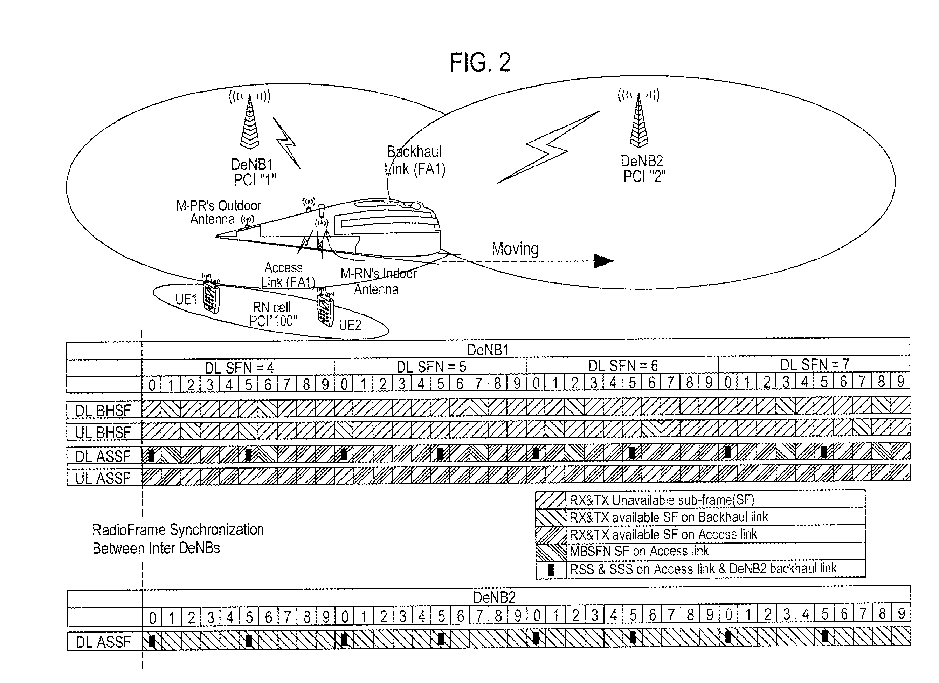

**FIG. 2** is a view illustrating support of mobility for a mobile relay node (M-RN), in which deployment of an inband M-RN in high-speed trains is illustrated.

In **FIG.2****,** a DeNB (DeNB1) sets six DL BHSFs having a period of 40 ms for the M-RN. This corresponds to a DL BHSF pattern that combines a basic DL BHSF pattern "01000000" and a basic DL BHSF pattern "00000010" among eight basic DL BHSF patterns "10000000" to "00000001" illustrated in **FIG. 1****.** After the DL BHSF is set, the RN no longer attempts to obtain the PSS, the SSS, and the MIB of the DeNB cell, configures an independent RN cell for the same time, and transmits the MIB, the PSS, and the SSS for the RN cell, thereby supporting the handover and the (re)selection to the RN cell. That is, in order to configure an independent cell and support the cell camping and the (re)selection of UEs under the RN cell, the RN should allocate the PSS and the SSS in the subframes sf#0 and sf#5 of the access link and transmit the same constantly. At the same time, the RN does not permit data allocation in order to avoid the SI for the corresponding subframes sf#0 and sf#5 in a backhaul link. Thus, after the RN cell is formed in the backhaul link, it is not possible to detect a PSS and an SSS of a target cell other than the serving cell in order to identify a new DeNB cell. For this reason, an effective mobility providing scheme for an inband M-RN is required.

For TDM inter-cell interference coordination (ICIC) and multimedia broadcast and multicast service (MBMS), generally, inter-eNBs based on REL-10 standards or greater need to be in a wireless frame synchronization state. That is, REL-12 DeNBs that can support an REL-12 M-RN, in particular, DeNBs installed in the vicinity of tracks of high-speed trains, need to be synchronized for wireless frames.

As illustrated in **FIG. 2****,** in order to measure a cell specific reference signal (CRS) of the DeNB (DeNB2), first, the M-RN needs to detect a PSS and an SSS of the DeNB (DeNB2) to recognize a length of a downlink cyclic prefix of the DeNB (DeNB2). Further, the M-RN needs to recognize an accurate timing position of the CRS of the DeNB (DeNB2) cell to measure reference symbol received power (RSRP) and inform the DeNB (DeNB1) about the measured RSRP. To this end, first of all, the M-RN needs to be able to receive subframes sf#0 and sf#5 under the serving cell of the DeNB (DeNB1) as necessary, like a general UE. However, in the inband scheme, the PSS and the SSS should be allocated in case of the subframes sf#0 and sf#5 of the access link for cell camping and reselection of UEs under the RN all the time, and thus, the subframes sf#0 and sf#5 in the backhaul link cannot be set as the DL BHSFs in order to avoid the SI. That is, it is not possible to identify a new DeNB cell in the backhaul link through detection of the PSS and SSS of a new target DeNB cell for mobility at the corresponding time.

In order to provide effective mobility to the inband M-RN, the subframes sf#0 and sf#5 need to be available for data allocation when introducing to a handover area between DeNBs without interruption of a service for UEs under the RN cell, so that handover may be performed from a source DeNB to an inter-DeNB. To this end, it is important to allow for data reception in the subframes sf#0 and sf#5 in the backhaul link during in-service for the RN cell and determine a reception point in time for the subframes sf#0 and sf#5.

The DL BHSF pattern illustrated in **FIG. 1** is "01000010". It corresponds to a case in which an expected number of UEs under the RN cell using two Un HARQ processes is significantly small. Since it is assumed that the M-RN is deployed in a high-speed train moving on a predetermined track in the 3GPP REL-12 standard as described above, the number of active UEs within the passenger cars of the high-speed train, that is, under the M-RN cell, may be significantly large, the DL BHSF pattern "01000010" illustrated in **FIG. 1** will be a minimum DL BHSF, and, if necessary, it should be set to "11111111", that is, 24 BHSFs per 40 ms. Mobility of UEs located in the M-RN cell within the train moving at a high speed may be assumed to be at a level of a general pedestrian, and an incoming handover to the M-RN cell will not be much more frequent unless the high-speed train is in a flag station.

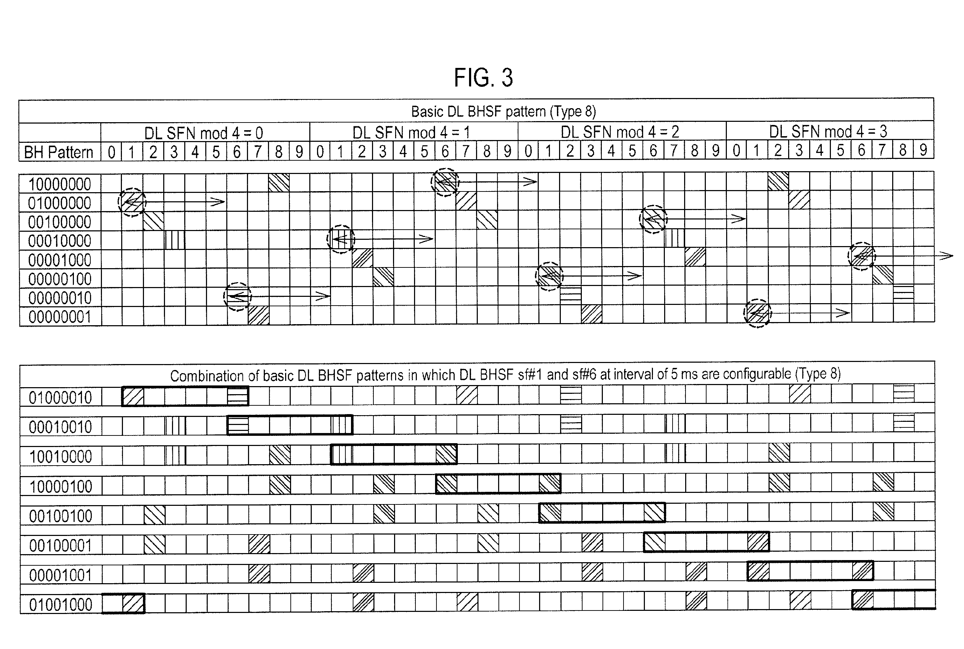

**FIG. 3** illustrates eight DL BHSF patterns in which subframes sf#1 and sf#6 at an interval of 5 ms at every 40 ms may be included by combining two basic DL BHSFs on the basis of eight basic DL BHSF patterns. In **FIG. 3****,** the subframes sf#1 and sf#6 are included at every 10 ms in the DL BHSF pattern "11111111". The two subframes sf#1 and sf#6 correspond to subframes sf#5 and sf#0 of the uplink backhaul subframe (UL BHSF), respectively. That is, when allocating the DL BHSF to M-RN, the DeNBs positioned on the track of the high-speed train may allocate the DL BHSF to the M-RN by determining any one of the eight DL BHSF patterns ("01000010" to "01001000") illustrated in **FIG. 3** and then additionally increasing the basic DL BHSF patterns depending on the number of active UEs under the RN cell or the number of RNs within a DeNB cell and combining them. At this time, when the allocation of the DL BHSF needs to be changed, the DeNBs can change the allocation by performing an SIB change procedure through paging.

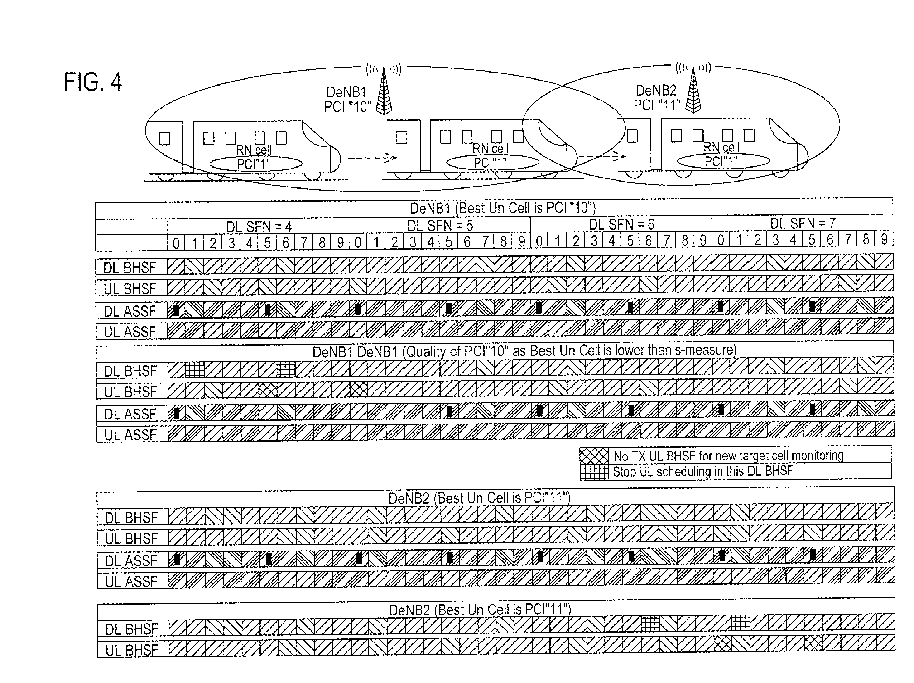

**FIG. 4** illustrates an example in which when the M-RN moves from a source DeNB (DeNB1: PCI10) to a target DeNB (DeNB2: PCI11), the handover is performed by detecting the target DeNB (DeNB2: PCI11) as a new DeNB cell using the DL BHSF patterns defined in **FIG. 3****.** Herein, a PCI and a cell global ID of the M-RN installed in each of passenger cars of the high-speed train are set by a relay node operation and management server when power of the M-RN is first turned on, whereby a problem such as PCI collision does not arise even when the DeNB cell is changed due to movement of the high-speed train.

As illustrated in **FIG. 4****,** it is assumed that the M-RN is in service with the DL BHSF pattern "1000010" using a cell PCI10 of the source DeNB (DeNB1) as a source serving cell. At a time when the M-RN enters a handover area of the cell PCI10 of the source DeNB (DeNB1) and a cell PCI11 of the target DeNB (DeNB2), RSRP/RSRQ of the source serving cell is dropped to below "S-measure" as a reference value for starting initiation of measurement of "intra&inter&interRAT handover". At this time, the M-RN does not perform backhaul uplink scheduling on the subframes sf#1 and sf#6 of the DL SFN "4". That is, the M-RN does not allocate any physical uplink shared channel (PUSCH) and physical uplink control channel (PUCCH) to the subframes sf#5 and sf#0 of a corresponding UL BHSF to transmit the same to the source DeNB (DeNB1), and does not transmit a PSS, an SSS, and a MIB of the RN cell in/to the access link, thereby attempting to detect a PSS and an SSS of the target DeNB cell at the corresponding time. The M-RN obtains time synchronization with the PCI (PCI11) of the target DeNB (DeNB2) cell and the target DeNB cell by using the detection results, and determines a length of a cyclic prefix of the target DeNB cell (PCI11) to attempt evaluation of a CRS of the target DeNB cell (PCI11). Subsequently, the M-RN informs the source DeNB (DeNB1) about a measurement report. In a follow-up procedure, a handover procedure is performed between inter-eNBs of a general UE to perform the handover between inter-DeNB cells. Herein, UEs under the M-RN cell transmit the PSS and the SSS three times, rather than four times, at the period of 40 ms, reducing transmission of the PSS and the SSS. However, this does not cause a problem because the UEs under the M-RN cell have little mobility within the M-RN cell. Further, a ratio of activity between downlink and uplink is 2:1 or greater. That is, even though a certain uplink backhaul subframe is not scheduled to monitor a PSS and an SSS of a new target DeNB cell, it does not cause a problem, and if there is uplink backhaul data, the M-RN may delay it through a buffer thereof, which may be adjusted by a scheduler function of the M-RN.

After the handover is completed, the new DeNB (DeNB2) establishes a new downlink backhaul link using DL BHSFs that can detect a PSS and an SSS of the new DeNB cell in order to effectively support mobility of the M-RN and DeNB UEs. For example, as illustrated in FIG. 4, the DeNB (DeNB2) establishes a new downlink backhaul link using the DL BHSF pattern "00110001" that combines the DL BHSF pattern "00100001" and the basic DL BHSF pattern "00010000" among the DL BHSF patterns "01000010" to "01001000" illustrated in **FIG. 3****.**

While certain embodiments have been described, these embodiments have been presented by way of example only, and are not intended to limit the scope of the inventions. Indeed, the novel methods and devices described herein may be embodied in a variety of other forms; furthermore, various omissions, substitutions and changes in the form of the embodiments described herein may be made without departing from the inventions. The accompanying claims and their equivalents are intended to cover such forms or modifications as would fall within the scope and spirit of the inventions.

### INDUSTRIAL USE OF THE PRESENT INVENTION

Embodiments of the present disclosure can be used in a mobile communication system or the like.

## Claims

1. A system for identifying a target base station cell, the system comprising:
a plurality of donor base stations positioned on a predetermined track in which a moving object moves, and configured to set a downlink backhaul subframe corresponding to a backhaul link operated at the same frequency as that of an access link by combining two basic downlink backhaul subframe patterns on the basis of a plurality of basic downlink backhaul subframe patterns;
a relay node operation and management server configured to transmit cell list information corresponding to the plurality of donor base stations; and
a mobile relay node managed in an inband manner, and configured to perform cell camping to a cell of a first donor base station based on the cell list information, and to identify a cell of a second donor base station to perform handover from the cell of the first donor base station based on the downlink backhaul subframe.

2. The system of Claim 1, wherein the first donor base station is configured to set a plurality of downlink backhaul subframe patterns by combining two basic downlink backhaul subframe patterns on the basis of the plurality of basic downlink backhaul subframe patterns, and to set the downlink backhaul subframe by using any one of the plurality of downlink backhaul subframe patterns.

3. The system of Claim 1, wherein the mobile relay node is configured to measure a reference symbol received power/reference signal received quality (RSRP/RSRQ) of the cell of the first donor base station to compare the measured RSRP/RSRQ with a handover measurement start reference value, and, when the measured RSRP/RSRQ is equal to or less than the reference value based on the comparison, to detect a primary synchronization signal (PSS) and a secondary synchronization signal (SSS) of the cell of the second donor base station, without performing backhaul uplink scheduling on the downlink backhaul subframe.

4. The system of Claim 3, wherein, when the measured RSRP/RSRQ is equal to or less than the reference value based on the comparison, the mobile relay node is configured to detect the PSS and the SSS of the cell of the second donor base station, without allocating a physical uplink shared channel (PUSCH) and a physical uplink control channel (PUCCH) to an uplink backhaul subframe corresponding to the downlink backhaul subframe to transmit the same to the first donor base station, and without transmitting the PSS, the SSS and a master information block (MIB) of the cell of the mobile relay node in the access link.

5. The system of any one of Claims 1 to 4, wherein the relay node operation and management server is further configured to set a physical cell ID (PCI) and a cell global ID of the mobile relay node when power of the mobile relay node is turned on, to prevent collision between PCIs.

6. A method for identifying a target base station cell, the method comprising:
a) performing cell camping to a cell of a fist donor base station based on cell list information of a plurality of donor base stations positioned on predetermined tracks in which a moving object moves; and
b) identifying a cell of a second donor base station to perform handover from the cell of the first donor base station based on a down link backhaul subframe, which is configured by combing two basic downlink backhaul subframe patterns on the basis of a plurality of basic downlink backhaul subframe patterns and corresponds to a backhaul link operated at the same frequency as that of an access link.

7. The method of Claim 6, wherein the downlink backhaul subframe pattern is set by using any one of a plurality of downlink backhaul subframe patterns which are set by combining two basic downlink backhaul subframe patterns the basis of the plurality of basic downlink backhaul subframe patterns.

8. The method of Claim 6, wherein the step b) comprises:
b1) measuring RSRP/RSRQ of the cell of the first donor base station and to compare the measured RSRP/RSRQ with a handover measurement start reference value; and
b2) when the measured RSRP/RSRQ is equal to or less than the reference value based on the comparison, detecting a primary synchronization signal (PSS) and a secondary synchronization signal (SSS) of the cell of the second donor base station, without performing backhaul uplink scheduling on the downlink backhaul subframe.

9. The method of Claim 8, wherein the step b2) comprises detecting the PSS and the SSS of the cell of the second donor base station, without allocating a physical uplink shared channel (PUSCH) and a physical uplink control channel (PUCCH) to an uplink backhaul subframe corresponding to the downlink backhaul subframe to transmit the same to the first donor base station, and without transmitting the PSS, the SSS and a master information block (MIB) of the cell of the mobile relay node in the access link.

10. The method of any one of Claims 6 to 9, wherein the step a) further comprises setting a physical cell ID (PCI) and a cell global ID of the mobile relay node when power of the mobile relay node is turned on, to prevent collision between PCIs.
